Europäisches Patentamt

European Patent Office

Office européen des brevets

(11) Publication number: **0 264 275 B1**

## EUROPEAN PATENT SPECIFICATION

(45) Date of publication of patent specification: **20.05.92**    (51) Int. Cl.⁵: **A01K   13/00**

(21) Application number: **87309096.3**

(22) Date of filing: **14.10.87**

(54) **Teat disinfecting device and method.**

(30) Priority: **14.10.86 US 918557**

(43) Date of publication of application:
**20.04.88 Bulletin   88/16**

(45) Publication of the grant of the patent:
**20.05.92 Bulletin   92/21**

(84) Designated Contracting States:
**AT BE CH DE FR GB LI NL SE**

(56) References cited:
**EP-A- 0 029 240**

(73) Proprietor: **Kessel, Daniel Wesley
511 San Antonio
Alto Texas 75925(US)**

(72) Inventor: **Kessel, Daniel Wesley
511 San Antonio
Alto Texas 75925(US)**

(74) Representative: **Lawrence, Malcolm Graham
et al
Hepworth, Lawrence & Bryer 2nd Floor, Gate
House South Westgate Road
Harlow Essex CM20 1JN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.08/2. 19/2.0)

## Description

This invention relates generally to devices and methods for applying a disinfecting solution to the teats of lactating dairy animals in conjunction with procedures for production of milk therefrom and in prevention of the development and transmission of teat and udder infections and diseases.

In connection with the operation of a modern dairy facility, it is normal for the operator to systematically and regularly treat the teats of lactating dairy animals in order to prevent the development and transmission of mastitis and other infections of the teats and udder. Health regulations and modern dairy practice mandate such disinfecting practice.

Despite the common use of such disinfecting practices, teat and udder infections have continued to present a significant problem for dairy operators, and there have been continuous efforts to develop effective and economical devices and methods of infection control.

In recent years the most common method of disinfection involves teat dipping, or immersion of the teat of lactating dairy animals in a disinfectant solution contained in a teat cup. This practice has, however, been found to be a contributing factor in the transmission of teat and udder infections and diseases, in that the infecting organisms are not completely destroyed by normally utilized disinfectant solutions, and may be transmitted by immersion of the teats of uninfected animals in a contaminated solution.

Commonly used alternative methods of disinfection, such as spraying of disinfectant solution upon the teats from a single nozzle, fail to achieve complete and effective application without use of an excessive volume of disinfectant solution. Such methods, to be reasonably effective, require careful and skillful application techniques which are difficult to consistently achieve in normal milking procedures.

It is apparent that a device and method for thorough and efficient application of disinfectant solution to the teats of dairy animals was desired and needed by the dairy industry.

EP-A-0 029 240 discloses a device for the application of liquid disinfecting fluid to the teats of dairy animals, the device comprising a thin walled hollow tube having a first substantially straight portion, see the inclined part at, and having a second portion interconnected to one end thereof and formed into a loop, providing a continuous fluid flow path through both portions of said hollow tube; and a plurality of spray emitting means disposed about the inner periphery of the looped portion of said thin walled hollow tube, lying substantially in the plane defined by said loop, and penetrating the wall of said tube to allow emission of fluid therefrom.

According to the invention, there is provided a method of disinfecting the teats of a dairy animal, the method comprising releasably attaching an end of a straight thin walled hollow tube portion of a teat disinfecting device to a source of pressurized disinfecting fluid, said end being open to expose the cavity of said tube portion; placing a portion of the teat disinfecting device formed of thin walled hollow tube in the shape of a loop about one teat of a dairy animal, the plane of said loop being essentially perpendicular to the longitudinal axis of the teat and the bottom end of the teat being positioned slightly above the plane of said loop; introducing pressurized disinfecting fluid from said source thereof into the open end of said tube portion of said teat disinfecting device; allowing said pressurized disinfecting fluid to flow from said source thereof through (i) the cavity of said straight tube portion of said disinfecting device, (ii) interconnecting means and (iii) the looped tube portion of said disinfecting device, for emission from a plurality of spray-emission means as a disinfecting mist disposed in the plane of the loop about the inner circumference of said looped tube portion of said disinfecting device, the spray emission means each being operable to direct said mist as a conical shaped disinfecting body of mist toward the longitudinal axis of the teat and above the plane of the loop to cover all surfaces of the teat; allowing emission from said spray emission means to form said mist bodies until the teat is suitably treated with such disinfecting mist; ceasing introduction of pressurized disinfecting fluid into said disinfecting device; removing said disinfecting device from about the teat so treated; and relocating said disinfecting device to a further teat to be treated with disinfecting fluid and repeating the aforesaid operations, beginning with introduction of disinfecting fluid into said disinfecting device, until treatment is complete.

The invention includes within its scope a teat disinfecting device as just defined above.

The hollow tube is preferably divided into two portions, namely a circular loop portion and a straight portion interconnected thereto which is open at the end opposite the loop. The circular loop portion is preferably formed such that the loop is closed, enclosing a hollow intratubal cavity and the circular loop portion of the tube is preferably interconnected to the straight portion of the tube such that the intratubal cavity is continuous and unbroken from the open end of the tube, through the area of interconnection or transition between the straight portion of the tube and the looped portion of the tube, and through the looped portion.

The disinfecting device conveniently comprises a plurality of spray emitting means disposed about the inner circumference of the looped portion of the tube and being generally in the plane of the loop. Such spray emitting means, preferably being nozzles, penetrate the wall of the tube and interconnect with the intratubal cavity so as to allow the passage of fluid from such cavity into and through such nozzles and emission of fluid from such nozzles in the direction of the axis of the loop. The spray nozzles are adapted such that a fluid, forced under pressure from the intratubal cavity through the nozzles, is dispersed or atomized into a fine mist directed toward the axis of the loop to which such nozzles are affixed. The spray nozzles are preferably adapted such that the mist emitted from each nozzle is dispersed in a semi-conical pattern. The device comprises a sufficient number of such spray nozzles that continuous mist coverage of at least the central half of the circular area defined by the loop is obtained during simultaneous nozzle emission of fluid.

The open end of the device is conveniently adapted so that it can be mated with and removably attached to a source of pressurized fluid by any suitable connecting means which allows the introduction of pressurized fluid into the open end of the device.

In typical operation or method of use, the device is first connected to the source of pressurized fluid to be used and the loop of the device is placed in proximity to a teat to be sprayed with the disinfecting solution, positioned such that the plane of the loop is slightly below the bottom or nipple of the teat. A sufficient volume of disinfecting solution to uniformly cover the surface area of the teat is introduced into the open end of the device with sufficient pressure to force the same volume of disinfecting solution to be emitted as mist from the spray nozzles and contact the surface of the teat.

The following is a specific description, by way of example only, of four embodiments of the invention, reference being made to the accompanying drawings, in which:-

Figure 1 is a plan view of the preferred embodiment of the device of the invention;

Figure 2 is a plan view of the loop portion of the preferred embodiment of the device of the invention, with an illustration of spray pattern;

Figure 3 is a plan view of a portion of the device illustrating its placement around a teat and illustrating spray pattern;

Figure 4 is an elevational section view taken generally on line 4-4 of Figure 3;

Figure 5 illustrates an alternative embodiment of the device;

Figure 6 illustrates a second alternative embodiment of the device; and

Figure 7 illustrates a third alternative embodiment of the device.

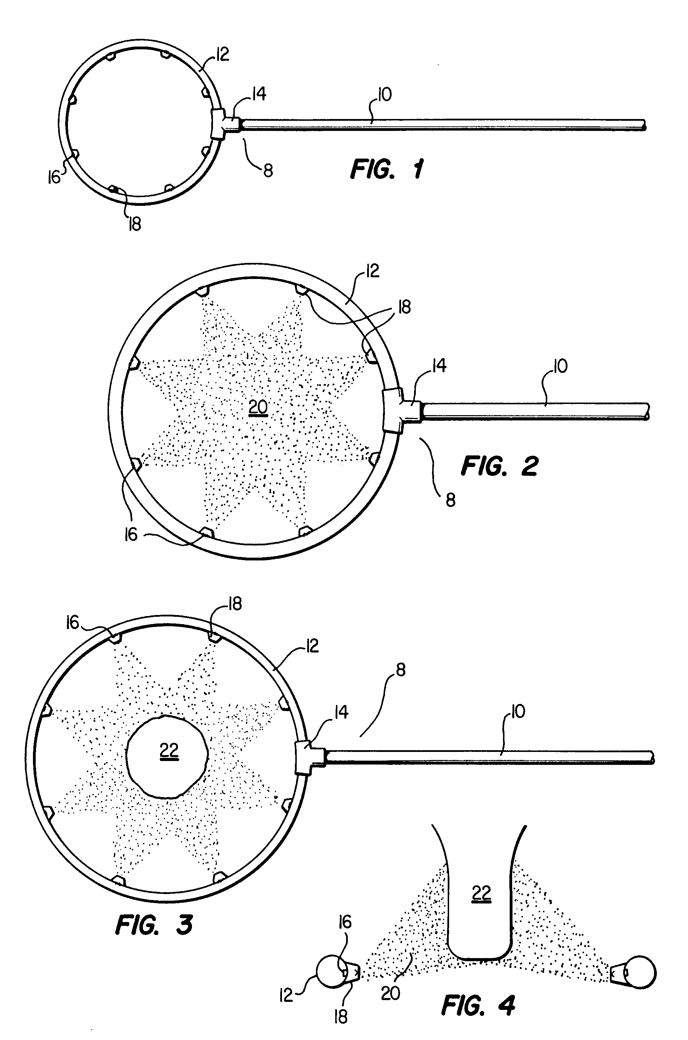

With reference to the figures, a detailed description of the preferred embodiment of the invention will be provided in the following. Referring first to Figure 1, the device 8 of the invention will be seen to comprise a first thin walled hollow tube 10 and a second thin walled hollow tube 12. The walls of both first tube 10 and second tube 12 define and enclose a central hollow cavity, and each tube is open at both ends so as to allow the introduction of fluid therein and the passage of such fluid through said hollow cavities. Said tubes 10 and 12 are preferably of substantially circular cross-section, but may be constructed with any cross-sectional configuration which defines a central cavity, such as square or triangular. As depicted in Figure 1, first tube 10 is substantially straight along its length. Second tube 12 is curved into a loop which is substantially circular as viewed perpendicular to the plane of the loop.

The device 8 preferably further includes interconnecting means 14, adapted to interconnect one end of first tube 10 with both ends of second tube 12 such that the intratubal cavity is continuous from the second end of first tube 10, through said interconnecting means 14 and about the loop of second tube 12. Said interconnecting means comprises a substantially "T" shaped interior or cavity enclosed by a continuous wall. The outer end of each leg of such "T" is open and adapted to receive and surround an end of either first tube 10 or second tube 12 in mating relationship so as to provide a leak proof interconnection. It will be understood that the cross-sectional configuration of the outer end of each leg of such interconnecting means 14 will be matched to the cross-sectional configuration of the respective end of either first tube 10 or second tube 12 to be received therein. The interconnection between interconnecting means 14 and the respective ends of tubes 10 and 12 may be secured by press fit or by any suitable adhesive means.

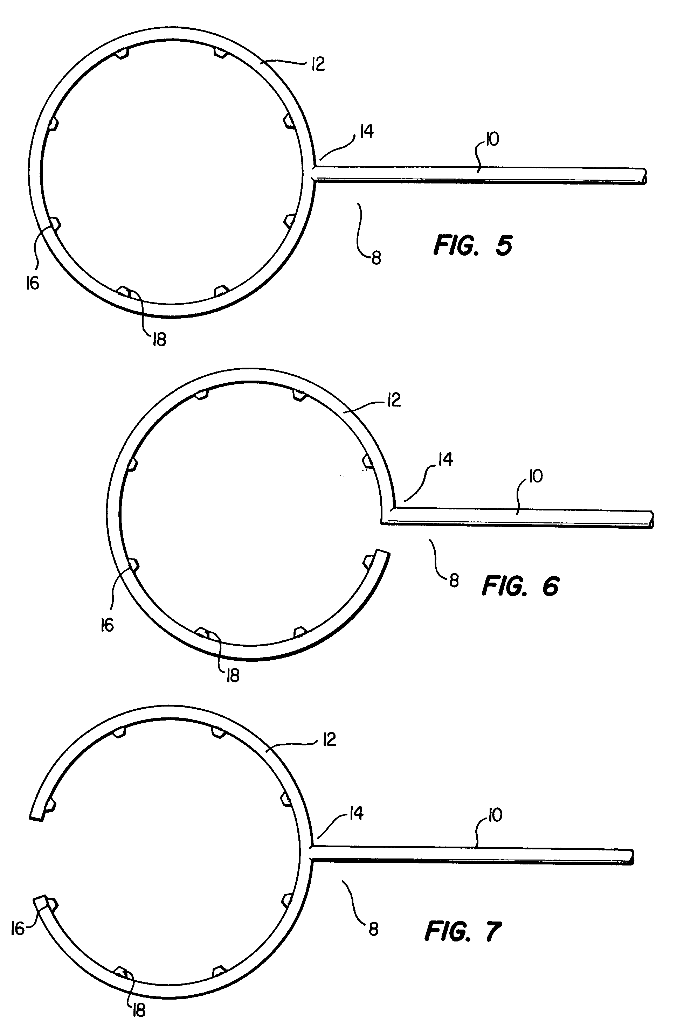

In an alternative embodiment of the device of the invention, illustrated by Figure 5, what has been previously described as first tube 10 and second tube 12 may be integrally formed, in the gross c onfiguration depicted in Figure 1 and Figure 2 and described above, as a continuous tube. Further alternative embodiments of the device of the invention, such as those illustrated in Figure 6 and Figure 7, wherein the looped portion of the device is not fully closed, may be utilized without departing from the spirit of the invention. It will be readily understood that, in such alternative embodiments which employ a broken loop, the end or ends of the tube or tubes forming such broken loop must be closed to prevent the emission of fluid therethrough.

As can be seen in the drawings, device 8 further includes a plurality of spray emitting means disposed about the inner periphery of tube 12 generally in the plane of the loop formed by tube 12. Such spray emitting means may be small holes or apertures fully penetrating the wall of tube 12, adapted to produce a fine spray or mist upon the passage of pressurized fluid therethrough. However, in the preferred embodiment as depicted in Figure 1 through Figure 4 said spray emitting means comprise apertures 16 adapted to receive nozzle 18. Each nozzle 18 communicates through each respective aperture 16 to the intratubal cavity enclosed by tube 12 so as to allow the passage of fluid from such cavity into and through nozzles 18 and emission of fluid from such nozzles in the direction of the axis of the loop. Nozzles 18 are adapted such that a fluid of essentially the same specific gravity and viscosity as water, forced under pressure from the intratubal cavity through nozzles 18, is dispersed or atomized into a fine mist. Nozzles 18 are preferably further adapted such that the mist emitted therefrom is dispersed in a semi-conical pattern as illustrated in Figure 4, which can be described as that portion of a cone, with its apex at the point of emission of fluid from the nozzle and with its axis perpendicularly intersecting the axis of the loop of the device, lying on one side the plane of the loop. The number of aperture 16 and corresponding nozzles 18 is selected such that a spray pattern 20 of continuous mist coverage of at least the central half of the circular area enclosed by the loop of the device is obtained during simultaneous emission of fluid from the nozzles, as illustrated in Figure 2 and Figure 3.

The open end of tube 10 is adapted to be removably attached to a source of pressurized fluid by any suitable attachment means which allows the introduction of pressurized fluid into the intratubal cavity of device 8 through said open end of tube 10. Said source of pressurized fluid will commonly consist of a hand held trigger-pump bottle, but device 8 is readily adaptable to use with pressurized aerosol cans, fixed pressurized containers with flexible hose connections and valved attachment means, or other commonly known fluid distribution systems. The attachment of device 8 to the fluid source must, however, be accomplished in such fashion that the operator of the device is able to control the introduction of pressurized fluid into the device for emission from nozzles 18 by manual pump operation or operation of a suitable valve.

The tubular loop portion of device 8 will preferably be approximately four inches in diameter, and tube 10 will preferably be approximately eight inches in length. However, it will be readily understood that specific dimensions are not critical to the function and utility of the invention, and any loop diameter and device length which reasonably allows operation as hereinafter described may be utilized within the spirit of the invention.

Device 8 is preferably constructed of a plastic material of sufficient strength and rigidity to maintain its shape and gross configuration, and of chemical characteristics which render the material essentially inert with respect to the disinfecting solution to be utilized. However, it will be understood that any material of suitable properties and characteristics may be used.

In operation, device 8 is first attached to the selected source of pressurized fluid to be used and sufficient fluid is introduced into the intratubal cavity to fill such cavity. The fluid consists of any liquid disinfectant solution approved for use to disinfect the teats of lactating dairy animals. The loop of the device is placed in proximity to a teat to be sprayed with the disinfecting solution, and positioned such that the centre of the circular area enclosed by the loop is generally aligned with the longitudinal axis of the teat and the plane of the loop is generally perpendicular to such longitudinal axis, with the bottom or nipple of the teat being slightly above the plane of the loop, so that the bottom of teat 22 is within spray pattern 20, illustrated in Figure 4. A sufficient volume of disinfecting solution to uniformly cover the surface area of the teat is introduced into the open end of the device 8 with sufficient pressure to force the same volume of disinfecting solution to be emitted as mist from nozzles 18 and contact the surface of teat 27. Upon completion of mist emission from such nozzles, the device is removed from around the teat so treated, positioned around the next teat to be treated, and the process is repeated as many times as necessary to complete the disinfecting process.

The subject device, used with the method described, allows complete coverage of each treated teat with disinfecting solution, conserves the disinfecting solution by avoiding application of excessive amounts of solution to the teat, and avoids contamination of the reserved disinfecting solution by preventing direct contact with the teat.

The invention includes within its scope apparatus comprising any of the forms of the device of the invention disclosed herein in combination with means to supply a disinfectant fluid to the device, for example reservoir means such as a container equipped for fluid pumping to the device of a disinfectant fluid contained therein.

## Claims

1. A method of disinfecting the teats (22) of a dairy animal, the method comprising releasably attaching an end of a straight thin walled hollow tube portion (10) of a teat disinfecting device (8) to a source of pressurized disinfecting fluid, said end being open to expose the cavity of said tube portion; placing a portion of the teat disinfecting device (8) formed of thin walled hollow tube in the shape of a loop (12) about one teat (22) of a dairy animal, the plane of said loop (12) being essentially perpendicular to the longitudinal axis of the teat (22) and the bottom end of the teat (22) being positioned slightly above the plane of said loop (12); introducing pressurized disinfecting fluid from said source thereof into the open end of said tube portion of said teat disinfecting device (8); allowing said pressurized disinfecting fluid to flow from said source thereof through (i) the cavity of said straight tube portion (10) of said disinfecting device (8), (ii) interconnecting means (14) and (iii) the looped tube portion (12) of said disinfecting device (8), for emission from a plurality of spray-emission means (16,18) as a disinfecting mist (20) disposed in the plane of the loop (12) about the inner circumference of said looped tube portion (12) of said disinfecting device (8), the spray emission means each being operable to direct said mist as a conical shaped disinfecting body of mist toward the longitudinal axis of the teat (22) and above the plane of the loop (12) to cover all surfaces of the teat (22); allowing emission from said spray emission means (16,18) to form said mist bodies until the teat (22) is suitably treated with such disinfecting mist; ceasing introduction of pressurized disinfecting fluid into said disinfecting device (8); removing said disinfecting device (8) from about the teat (22) so treated; and relocating said disinfecting device (8) to a further teat (22) to be treated with disinfecting fluid and repeating the aforesaid operations, beginning with introduction of disinfecting fluid into said disinfecting device (8), until treatment is complete.

2. A method as claimed in claim 1 wherein said second portion (12) of said tube of said disinfecting device is interconnected to said first portion (10) of said tube at one end of said second portion (12), the end of said second portion (12) of said tube opposite the interconnection (14) of said second portion (12) to said first portion (10) is closed, and said loop formed by said second portion (12) is not closed.

3. A method as claimed in Claim 1 or Claim 2 wherein said spray emitting means (16,18) of said disinfecting device comprises perforations or holes (16) penetrating the wall of said thin walled hollow tube (12).

4. A method as claimed in Claim 1 or Claim 2 wherein said spray emitting means (16,18) of said disinfecting device comprises apertures (16) penetrating the wall of said thin walled hollow tube (12), and spray emitting nozzles (18) firmly attached to said tube (12) and extending through said apertures (16) so as to allow emission of fluid therefrom.

5. A method as claimed in any preceding claim wherein the disinfecting device comprises a first straight thin walled hollow tube section (10); a second thin walled hollow tube section (12) formed into a substantially circular loop; interconnecting means (14) between one end of said first tube section (10) and said second tube section (12) adapted to provide an uninterrupted fluid path through said first tube section (10), interconnecting means (14), and said second tube section (12); and a plurality of spray emitting nozzles (18) disposed about the inner circumference of the loop formed by the second tube section (12) and penetrating the wall of said second tube section (12) for emission of disinfecting fluid therethrough.

6. A method as claimed in Claim 5 wherein said interconnecting means (14) of said disinfecting device comprises a thin walled hollow "T" shaped body open at the end of each of its three legs, one end of said first thin walled hollow tube (10) and each end of said second thin walled hollow tube (12) being respectively inserted into each of the three legs of said "T" shaped body in leak-proof mating relationship between the walls of said tubes and the wall of said "T" shaped body.

7. A method as claimed in Claim 5 wherein said interconnecting means (14) of said disinfecting device comprises an integral melding of one end of said first thin walled hollow tube section (10) with the wall of said second thin walled hollow tube section (12), fully surrouding an aperture in the wall of said second thin walled tube section so as to allow the flow of fluid between the intratubal cavities of said tube sections.

8. A method as claimed in any one of Claims 5 to 7 wherein said second thin walled hollow tube section (12) of said disinfecting device has first and second closed ends, the loop formed by such second tube section (12) is not a closed loop, and the interconnection (14) between one end of said first tube section (10) and said second tube section (12) is intermediate the ends of said second tube section (12).

9. A method as claimed in any one of Claims 5 to 8 wherein the end of said first thin walled hollow tube section (10) of said disinfecting device opposite the interconnection to said second thin walled hollow tube section (12) is open and adapted to be releasably attached to a source of pressurized disinfecting fluid.

10. A method as claimed in any one of Claims 5 to 9 wherein each of said spray emitting nozzles (18) of said disinfecting device is adapted to produce a spray pattern (20), upon emission of disinfecting fluid therefrom, which comprises that portion of a cone, with its apex at the point of emission of fluid from said nozzle (18), which lies on one side of the plane defined by said loop; and further wherein the intersection of spray patterns (20) of the plurality of nozzles (18) covers at least the central half of the area enclosed by said loop.

11. A method as claimed in any preceding claim wherein the diameter of the loop of said disinfecting device formed by said second thin walled hollow tube section (12) is not less than one and one half inches and not greater than six inches.

12. A device for the application of liquid disinfecting material to the teats of dairy animals which device comprises a straight thin walled hollow tube portion (10) open at an end thereof for exposure of the cavity of said tube portion and connection thereof to a source of pressurized disinfecting liquid, a portion formed of thin walled hollow tube and having the shape of a loop (12) for placement about one of said teats (22) of said dairy animal, the plane of said loop (12) being essentially perpendicular to the longitudinally axis of the teat (22) about which it is to be placed in use and the bottom end of the teat (22) being positioned slightly above the plane of said loop (12), pressurized disinfecting fluid in use of the device being introduced from said source thereof into the open end of the straight tube portion (10) of the teat disinfecting device and being allowed to flow from said source thereof through (i) the cavity of said straight tube portion (10) of said disinfecting device (8), (ii) interconnecting means (14) of the device and (iii) the looped portion (12) of said disinfecting device (8), for emission from a plurality of spray-emission means (16,18) of said device, said spray-emission means (16,18) being so formed and arranged that said fluid is emitted as a disinfecting mist (20) disposed in the plane of the loop (12) about the inner circumference of said looped tube portion (12) of said disinfecting device (8), the spray emission means each being so configured and arranged as in operation of the device to direct said mist as a conical shaped disinfecting body of mist toward the longitudinal axis of the teat (22) and above the plane of the loop (12) to cover all surfaces of the teat (22).

**Revendications**

1. Procédé pour désinfecter les tettes (22) d'un animal laitier, le procédé comprenant les étapes consistant à fixer de manière amovible une extrémité d'une portion de tube creux à parois minces, droit, (10) d'un dispositif (8) de désinfection de tettes à une source de fluide désinfectant sous pression, ladite extrémité étant ouverte pour exposer la cavité de ladite portion de tube; placer une portion du dispositif (8) de désinfection de tettes constituée d'un tube creux à parois minces en forme d'anneau (12) à proximité d'une tette (22) d'un animal laitier, le plan dudit anneau (12) étant sensiblement perpendiculaire à l'axe longitudinal de la tette (22) et l'extrémité inférieure de la tette (22) étant positionnée légèrement au-dessus du plan dudit anneau (12); introduire du fluide désinfectant sous pression depuis sa source dans l'extrémité ouverte de ladite portion de tube dudit dispositif (8) de désinfection de tettes; laisser ledit fluide désinfectant sous pression s'écouler depuis sa source dans (i) la cavité de ladite portion de tube droit (10) dudit dispositif de désinfection (8), (ii) un moyen d'interconnexion (14) et (iii) la portion de tube en anneau (12) dudit dispositif de désinfection (8), pour une émission depuis une pluralité de moyens d'émission de spray (16, 18) en un brouillard désinfectant (20) disposé dans le plan de l'anneau (12) selon la circonférence interne de ladite portion de tube en anneau (12) dudit dispositif de désinfection (8), les moyens d'émission de spray ayant chacun pour fonction de diriger ledit brouillard en un corps désinfectant conique de brouillard vers l'axe longitudinal de la tette (22) et au-dessus du plan de l'anneau (12) pour couvrir toutes les surfaces de la tette (22); laisser l'émission depuis lesdits moyens d'émission de spray (16,18) former lesdits corps de brouillard jusqu'à ce que la tette (22) soit correctement traitée avec ce brouillard désinfectant; arrêter l'introduction de fluide désinfectant sous pression dans ledit dispositif de désinfection (8); enlever ledit dispositif de désinfection (8) du voisinage la tette (22) ainsi traitée; et replacer ledit dispositif de désinfection (8) près d'une autre tette (22) à traiter avec le fluide désinfectant et répéter les opérations précitées, en commençant par l'introduction de fluide désinfectant dans ledit dispositif de désinfection (8), jusqu'à ce que le traitement soit terminé.

2. Procédé selon la revendication 1, dans lequel ladite seconde portion (12) dudit tube dudit dispositif de désinfection est interconnectée à ladite première portion (10) dudit tube à une extrémité de ladite seconde portion (12), l'extrémité de ladite seconde portion (12) dudit tube à l'opposé de l'interconnexion (14) de ladite seconde portion (12) à ladite première portion (10) est fermée, et ledit anneau formé par ladite seconde portion (12) n'est pas fermé.

3. Procédé selon la revendication 1 ou 2, dans lequel lesdits moyens d'émission de spray (16, 18) dudit dispositif de désinfection comprennent des perforations ou trous (16) traversant la paroi dudit tube creux à parois minces (12).

4. Procédé selon la revendication 1 ou 2, dans lequel lesdits moyens d'émission de spray (16, 18) dudit dispositif de désinfection comprennent des ouvertures (16) traversant la paroi dudit tube creux à parois minces (12), et des buses d'émission de spray (18) solidement fixées audit tube (12) et s'étendant dans lesdites ouvertures (16) pour permettre l'émission de fluide depuis ces dernières.

5. Procédé selon l'une quelconque des revendications précédentes, dans lequel le dispositif de désinfection comprend une première section de tube creux à parois minces, droit, (10); une seconde section de tube creux à parois minces (12) en forme d'anneau sensiblement circulaire, un moyen d'interconnexion (14) entre une extrémité de ladite première section de tube (10) et ladite seconde section de tube (12) adapté à former un passage de fluide ininterrompu dans ladite première section de tube (10), le moyen d'interconnexion (14), et ladite seconde section de tube (12); et une pluralité de buses (18) d'émission de spray disposées sur la circonférence interne de l'anneau formé par la seconde section de tube (12) et traversant la paroi de ladite seconde section de tube (12) pour émission de fluide désinfectant à travers cette dernière.

6. Procédé selon la revendication 5, dans lequel ledit moyen d'interconnexion (14) dudit dispositif de désinfection consiste en un corps en "T" creux à parois minces, ouvert à l'extrémité de chacune de ses trois branches, une extrémité dudit premier tube creux à parois minces (10) et chaque extrémité dudit second tube creux à parois minces (12) étant respectivement insérées dans chacune des trois branches dudit corps en "T" en une relation d'accouplement étanche entre les parois desdits tubes et la paroi dudit corps en "T".

7. Procédé selon la revendication 5, dans lequel ledit moyen d'interconnexion (14) dudit dispositif de désinfection consiste en un moulage d'un seul tenant d'une extrémité de ladite première section de tube creux à parois minces (10) avec la paroi de ladite seconde section de tube creux à parois minces (12), entourant complètement une ouverture dans la paroi de ladite seconde section de tube à parois minces de manière à permettre l'écoulement de fluide entre les cavités intra-tubulaires desdites sections de tube.

8. Procédé selon l'une quelconque des revendications 5 à 7, dans lequel ladite seconde section de tube creux à parois minces (12) dudit dispositif de désinfection comporte une première et une seconde extrémité fermée, l'anneau formé par ladite seconde section de tube (12) n'est pas un anneau fermé, et l'interconnexion (14) entre une extrémité de ladite première section de tube (10) et ladite seconde section de tube (12) est à mi-chemin des extrémités de ladite seconde section de tube (12).

9. Procédé selon l'une quelconque des revendications 5 à 8, dans lequel l'extrémité de ladite première section de tube creux à parois minces (10) dudit dispositif de désinfection à l'opposé de l'interconnexion à ladite seconde section de tube creux à parois minces (12) est ouverte et adaptée à être fixée de manière amovible à une source de fluide désinfectant sous pression.

10. Procédé selon l'une quelconque des revendications 5 à 9, dans lequel chacune desdites buses d'émission de spray (18) dudit dispositif de désinfection est adaptée à produire une configuration de spray (20), lors de l'émission de fluide désinfectant depuis elle, qui comprend une portion d'un cône, avec son sommet au point d'émission du fluide depuis ladite buse (18), qui se situe sur un côté du plan défini par ledit anneau; et dans lequel, en outre, l'intersection des configurations de spray (20) de la pluralité de buses (18) couvre au moins la moitié centrale de la zone ceinte par ledit anneau.

11. Procédé selon l'une quelconque des revendications précédentes, dans lequel le diamètre de l'anneau dudit dispositif de désinfection formé par ladite seconde section de tube creux à parois minces (12) est compris entre 3,8 cm (1,5 pouces) et 15,2 cm (6 pouces).

12. Dispositif pour l'application de matière désinfectante liquide sur les tettes d'animaux laitiers, lequel dispositif comprend une portion de tube creux à parois minces, droit, (10) ouvert à une des ses extrémités pour exposer la cavité de ladite portion de tube et la raccorder à une source de liquide désinfectant sous pression, une portion constituée d'un tube creux à parois minces et ayant la forme d'un anneau (12) pour mise en place à proximité d'une desdites tettes (22) dudit animal laitier, le plan dudit anneau (12) étant sensiblement perpendiculaire à l'axe longitudinal de la tette (22) à proximité de laquelle il doit être placé à l'utilisation et l'extrémité inférieure de la tette (22) étant disposée légèrement au-dessus du plan dudit anneau (12), le fluide désinfectant sous pression à l'utilisation du dispositif étant introduit depuis sa source dans l'extrémité ouverte de la portion de tube droit (10) du dispositif de désinfection de tettes et étant laissé s'écouler depuis sa source dans (i) la cavité de ladite portion de tube droit (10) dudit dispositif de désinfection (8), (ii) le moyen d'interconnexion (14) du dispositif et (iii) la portion en anneau (12) dudit dispositif de désinfection (8), pour émission depuis une pluralité de moyens d'émission de spray (16, 18) dudit dispositif, lesdits moyens d'émission de spray (16, 18) étant formés et agencés de manière que ledit fluide soit émis en un brouillard désinfectant (20) situé dans le plan de l'anneau (12) selon la circonférence interne de ladite portion de tube en anneau dudit dispositif de désinfection (8), les moyens d'émission de spray étant chacun configuré et disposé pour, lors de l'utilisation du dispositif, diriger ledit brouillard en un corps désinfectant conique de brouillard vers l'axe longitudinal de la tette (22) et au-dessus du plan de l'anneau (12) pour couvrir toutes les surfaces de la tette (22).

**Patentansprüche**

1. Verfahren zum Desinfizieren der Zitzen (22) eines Milchviehs, wobei das Verfahren das lösbare Anbringen eines Endes eines geraden, dünnwandigen, hohlen Rohrteiles (10) einer Zitzen-Desinfektionseinrichtung (8) an einer Quelle von unter Druck stehendem Desinfektionsfluid, wobei dieses Ende zum Freilegen des Hohlraumes dieses Rohrabschnittes offen ist; Placieren eines Teiles der Zitzen-Desinfektionseinrichtung (8), welche von dem dünnwandigen, hohlen Rohr in der Form eines Ringes (12) gebildet ist, über einer Zitze (22) eines Milchviehs, wobei die Ebene dieses Ringes (12) im wesentlichen normal auf die Längsachse der Zitze (22) steht und das untere Ende der Zitze (22) geringfügig über der Ebene dieses Ringes (12) positioniert ist; Einbringen des unter Druck stehenden Desinfektionsfluids aus dessen Quelle in das offene Ende des Rohrabschnittes der Desinfektionseinrichtung (8); Strömenlassen des unter Druck stehenden Desinfektionsfluids aus der Quelle durch (i) den Hohlraum des geraden Rohrabschnittes (10) der Desinfektionseinrichtung (8), (ii) Verbindungseinrichtungen (14) und (iii) den ringförmigen Rohrabschnitt (12) der Desinfektionseinrichtung (8) zum Austritt aus einer Mehrzahl von Spray-Austragseinrichtungen (16,18) als ein Desinfektionsnebel (20), welche in der Ebene des Ringes (12) etwa an dem Innenumfang des ringförmigen Rohrteiles (12) der Desinfektionseinrichtung (8) gelagert sind, wobei die Spray-Austragseinrichtungen jeweils einstellbar sind, um den Nebel als konischen Desinfektionsnebel gegen die Längsachse der Zitze (22) zu richten und über der Ebene des Ringes (12) die gesamte Oberfläche der Zitze (22) zu überstreichen; Ausströmenlassen aus den Spray-Austragseinrichtungen (16,18), um die Nebelkörper zu bilden, bis die Zitze (22) mit dem desinfizierenden Nebel behandelt ist; Abbrechen der Zufuhr des unter Druck stehenden Desinfektionsfluids in die Desinfektionseinrichtung (8); Entfernen der Desinfektionseinrichtung (8) von der so behandelten Zitze (22) und neuerliches Lokalisieren der Desinfektionseinrichtung (8) an einer weiteren, mit Desinfektionsfluid zu behandelnden Zitze (22), und Wiederholen der vorgenannten Operationen, beginnend mit der Zufuhr des Desinfektionsfluids in die Desinfektionseinrichtung (8), bis die Behandlung vollständig ist, umfaßt.

2. Verfahren nach Anspruch 1, worin der zweite Teil (12) des Rohres der Desinfektionseinrichtung mit dem ersten Teil (10) des Rohres an einem Ende des zweiten Teiles (12) verbunden ist, wobei das Ende des zweiten Teiles (12) des Rohres gegenüberliegend der Verbindung (14) des zweiten Teiles (12) mit dem ersten Teil (10) geschlossen ist, und der durch den zweiten Teil (12) gebildete Ring nicht geschlossen ist.

3. Verfahren nach Anspruch 1 oder 2, worin die Spray-Austragseinrichtung (16,18) der Desinfektionseinrichtungen Perforationen oder Löcher (16) aufweist, welche die Wand des dünnwandigen, hohlen Rohres (12) durchsetzen.

4. Verfahren nach Anspruch 1 oder 2, worin die Spray-Austragseinrichtungen (16,18) der Desinfektionseinrichtung Öffnungen (16), welche die Wand des dünnwandigen, hohlen Rohres (12) durchsetzen, und Spray-emitterende Düsen (18), welche beständig an das Rohr (12) angebracht sind und durch diese Öffnungen (16) hindurchtreten, um die Emission des Fluids hierdurch zu ermöglichen, umfaßt.

5. Verfahren nach einem der vorhergehenden Ansprüche, worin die Desinfektionseinrichtung einen ersten geraden, dünnwandigen, hohlen Rohrabschnitt (10); einen zweiten dünnwandigen, hohlen Rohrabschnitt (12), welcher im wesentlichen in einer ringförmigen Schlaufe ausgebildet ist; Verbindungsmittel (14) zwischen einem Ende des ersten Rohrabschnittes (10) und dem zweiten Rohrabschnitt (12), welche so adaptiert sind, um einen unterbrochenen Flüssigkeitsstrom durch den ersten Rohrabschnitt (10), die Verbindungsmittel (14) und den zweiten Rohrabschnitt (12) sicherzustellen; und eine Mehrzahl von Spray-emitterenden Düsen (18) aufweist, welche am Innenumfang des von dem zweiten Rohrabschnitt (12) gebildeten Ringes angeordnet sind und die Wand des zweiten Rohrabschnittes (12) zur Emission des Desinfektionsfluids hierdurch durchdringen.

6. Verfahren nach Anspruch 5, worin die Verbindungsmittel (14) der Desinfektionseinrichtung einen dünnwandigen, T-förmigen Körper, welcher an jedem Ende der drei Schenkel offen ist, aufweisen, wobei ein Ende des ersten dünnwandigen, hohlen Rohres (10) und jeweils ein Ende des zweiten dünnwandigen, hohlen Rohres (12) in jeden der drei Schenkel des T-förmigen Körpers zur dichtenden Verbindung zwischen den Wänden der Rohre und dem T-förmigen Körper eingefügt ist.

7. Verfahren nach Anspruch 5, worin das Verbindungsmittel (14) der Desinfektionseinrichtung eine Schweißverbindung eines Endes des ersten dünnwandigen, hohlen Rohrabschnittes (10) mit der Wand des zweiten dünnwandigen, hohlen Rohrabschnittes (12), wobei eine Öffnung in der Wand des zweiten dünnwandigen Rohrabschnittes vollständig umgeben ist, so daß der Fluß des Fluids in den Ausnehmungen der Rohrabschnitt sichergestellt ist, darstellt.

8. Verfahren nach einem der Ansprüche 5 bis 7, worin der zweite dünnwandige, hohle Rohrabschnitt (12) der Desinfektionseinrichtung erste und zweite geschlossene Enden aufweist, der durch derartige zweite Rohrabschnitte (12) gebildete Ring ein nicht-geschlossener Ring ist, und die Verbindung (14) zwischen einem Ende des ersten Rohrabschnittes (10) und dem zweiten Rohrabschnitt (12) zwischen den Enden des zweiten Rohrabschnittes (12) liegt.

9. Verfahren nach einem der Ansprüche 5 bis 8, worin das Ende des ersten dünnwandigen, hohlen Rohrabschnittes (10) der Desinfektionseinrichtung, welche der Verbindung des zweiten dünnwandigen, hohlen Rohrabschnittes (12) gegenüberliegt, offen ist und so adaptiert ist, daß es lösbar mit einer Quelle von unter Druck stehendem Desinfektonsfluid verbindbar ist.

10. Verfahren nach einem der Ansprüche 5 bis 9, worin jede der Spray-emitterenden Düsen (18) der Desinfektionseinrichtung so adaptiert ist, daß sie ein Spray-Muster (20) bei der Emission des Desinfektionsfluids bildet, welches jenen Teil eines Konus mit seinem Scheitel am Emissionspunkt der Flüssigkeit aus der Düse (18) umfaßt, welcher an einer Seite der Ebene, welche durch den Ring gebildet ist, liegt und weiters das Überschneiden der Spray-Muster (20) von einer Mehrzahl von Düsen (18) wenigstens die zentrale Hälfte der Fläche, welche durch den Ring eingehüllt ist, überdeckt.

11. Verfahren einem der vorhergehenden Ansprüche, worin der Durchmesser des Ringes der Desinfektionseinrichtung, welche durch den zweiten dünnwandigen, hohlen Rohrabschnitt (12) gebildet ist, nicht weniger als 1,5 Inch und nicht größer als 6 Inch ist.

12. Einrichtung für das Aufbringen von flüssigem Desinfektionsmaterial auf die Zitzen von Milchvieh, umfassend einen geraden, dünnwandigen, hohlen Rohrabschnitt (10), welcher an einem Ende zum Freilassen des Hohlraumes des Rohrabschnittes und Verbindung desselben mit einer Quelle von unter Druck stehender Desinfektionsflüssigkeit offen ist, und einen Teil eines dünnwandigen, hohlen Abschnittes und in Form eines Ringes (12) zur Placierung an einer der Zitzen (22) des Milchviehs, wobei die Ebene der Schlaufe (12) im wesentlichen normal auf die Längsachse der Zitze (22), auf welche sie während der Verwendung placiert wird, steht und das zum Boden gewandte Ende der Zitze (22) wenig über der Ebene der Schlaufe (12) positioniert ist, wobei während der Verwendung unter Druck stehende Desinfektionsflüssigkeit von der Flüssigkeitsquelle in das offene Ende des geraden Rohrabschnittes (10) der Zitzen-Desinfektionseinrichtung eingeführt wird, und welches von dieser Quelle durch (i) den Hohlraum des geraden Rohrabschnittes (10) der Desinfektionseinrichtung (8), (ii) die Verbindungsmittel (14) der Einrichtung und (iii) den ringförmigen Teil (12) der Desinfektionseinrichtung (8) strömen gelassen wird, zur Emission aus einer Mehrzahl von Spray-Austragseinrichtungen (16,18) der Einrichtung, wobei die Spray-Austragseinrichtungen (16,18) so gebildet und arrangiert sind, daß das Fluid als ein Desinfektionsnebel (20), welcher in der Ebene der Schlaufe (12) in etwa im inneren Umfang des schlaufenförmigen Rohrabschnittes (12) der Desinfektionseinrichtung (8) liegend, emittiert wird, wobei die Spray-Austragseinrichtungen jeweils so konfiguriert und angeordnet sind, daß während der Arbeit der Einrichtung der Nebel als konischer Desinfektionsnebel gegen die Längsachse der Zitze (22) und über der Ebene der Schlaufe (12) gerichtet ist, um die gesamte Oberfläche der Zitze zu überstreichen.

**FIG. 1**

**FIG. 2**

**FIG. 3**

**FIG. 4**

FIG. 5

FIG. 6

FIG. 7